Europäisches Patentamt

European Patent Office

Office européen des brevets

(11) Publication number: **0 204 330 B1**

(12) **EUROPEAN PATENT SPECIFICATION**

(45) Date of publication of patent specification: **04.09.91**

(51) Int. Cl.⁵: **F16F 7/10, B63G 8/38, B63B 27/10**

(21) Application number: **86107606.5**

(22) Date of filing: **04.06.86**

Divisional application 90107257.9 filed on 04/06/86.

(54) **Dynamic vibration absorber.**

(30) Priority: **04.06.85 JP 120820/85**
**27.06.85 JP 141192/85**
**18.02.86 JP 33363/86**

(43) Date of publication of application:
**10.12.86 Bulletin 86/50**

(45) Publication of the grant of the patent:
**04.09.91 Bulletin 91/36**

(84) Designated Contracting States:
**DE GB NL**

(56) References cited:
**DE-A- 2 007 914     DE-A- 2 509 001**
**GB-A- 434 355      GB-A- 950 983**
**GB-A- 2 040 429     US-A- 4 372 431**

(73) Proprietor: **NIPPON KOKAN KABUSHIKI KAISHA**
**1-2 Marunouchi 1-chome Chiyoda-ku Tokyo 100(JP)**

(72) Inventor: **Kondo, Kiyoshi Pat. Div NIPPON KOKAN K.K.**
**1-2, 1-chome Marunouchi Chiyoda-ku Tokyo(JP)**
Inventor: **Uno, Kiyotaka Pat. Div NIPPON KOKAN K.K.**
**1-2, 1-chome Marunouchi Chiyoda-ku Tokyo(JP)**
Inventor: **Kataoka, Fukuhiko Pat. Div NIPPON KOKAN K.K.**
**1-2, 1-chome Marunouchi Chiyoda-ku Tokyo(JP)**
Inventor: **Asano, Kozo Pat. Div NIPPON KOKAN K.K.**
**1-2, 1-chome Marunouchi Chiyoda-ku Tokyo(JP)**

(74) Representative: **Popp, Eugen, Dr. et al MEISSNER, BOLTE & PARTNER Widenmayerstrasse 48 Postfach 86 06 24 W-8000 München 86(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a dynamic vibration absorber body comprising dynamic vibration absorber units of a spring-supported pendulum type arranged at right angles to one another within a horizontal plane.

In general, radar masts or crane posts of vessels, sail posts of sailboats, etc., are low in vibration damping capacity. They sometimes whirl violently when they resonate with the exciting force of main engines or propellers, or when they are exposed to the wind. Projecting long from the hull, these structures are so unstable that they cannot easily be damped, especially if they are large-sized.

Dynamic vibration absorbers of a pendulum type are conventionally known as a means of vibration prevention. In these absorbers, as for example disclosed in GB-A-2 040 429, one or two vertically spaced ring-shaped weights are arranged at the top of a chimney or stack by means of a plurality of units, each comprising both a pendulum and two dampers. However, the efficiency of the absorbers of this type is rather poor since there is no direct correlation between the two vibration damping weights, so that a controlled absorption of multidirectional vibrations is not possible.

Also generally known are dynamic vibration absorbers of a spring-supported pendulum type, in which vibration of an oscillating structure is absorbed by a spring-mass system having a natural frequency equivalent to the oscillation frequency of the structure (DE-A-2 509 001, US-A-4,372,431).

However, one such prior art dynamic vibration absorber can absorb only vibration in one direction. Therefore, absorption of, for example, whirling vibration additionally requires the use of another dynamic vibration absorber which absorbs vibration in a direction perpendicular to the first direction, thus necessitating a wide installation space.

The object of the present invention is to provide a dynamic vibration absorber system of the above identified type which is of a compact design capable of absorbing multidirectional vibration of a structure at a high efficiency rate.

According to the present invention, the said system is characterized in that one of said dynamic vibration absorber units in one direction includes an outer frame of said body, said outer frame enclosing an inner frame as weight means mounted in the outer frame by means of first springs such as to move in said one direction, and the other dynamic vibration absorber unit at right angles of the first one includes the inner frame and a weight mounted in the inner frame by means of second springs such as to move in a direction at right angle to the said one direction.

The dynamic vibration absorber units according to the present invention are arranged at right angles to one another within a horizontal plane so as to absorb whirling vibration of the structure in a controlled and highly efficient manner. Due to the cross-directed absorbing effect of the central weight in addition to the absorbing effect of the inner frame the damping effect against whirling vibration of a post or the like is remarkably improved.

All the different weights or frames, respectively, of the structure according to the present invention are forming a jointly, pre-harmonized unit for absorbing multidirectional vibrations.

The guides as claimed for in claim 3 eliminate the drawback of springs in general in so far that they vibrate in various directions.

A similar effect is being obtained by the structure according to claim 4.

Claim 2 refers to a preferred frame structure both of the inner and outer frame as proposed by the present invention.

The present invention may be more fully understood from the following detailed description when taken in conjunction with the accompanying drawings, in which:

Fig. 1    is a plan view showing a first embodiment of the invention;

Fig. 2    is a plan view showing a modification of the first embodiment;

Fig. 3(a)    is a plan view showing a second embodiment of the invention with a top plate removed; and

Fig. 3(b)    is a side view, half in vertical section, showing the second embodiment.

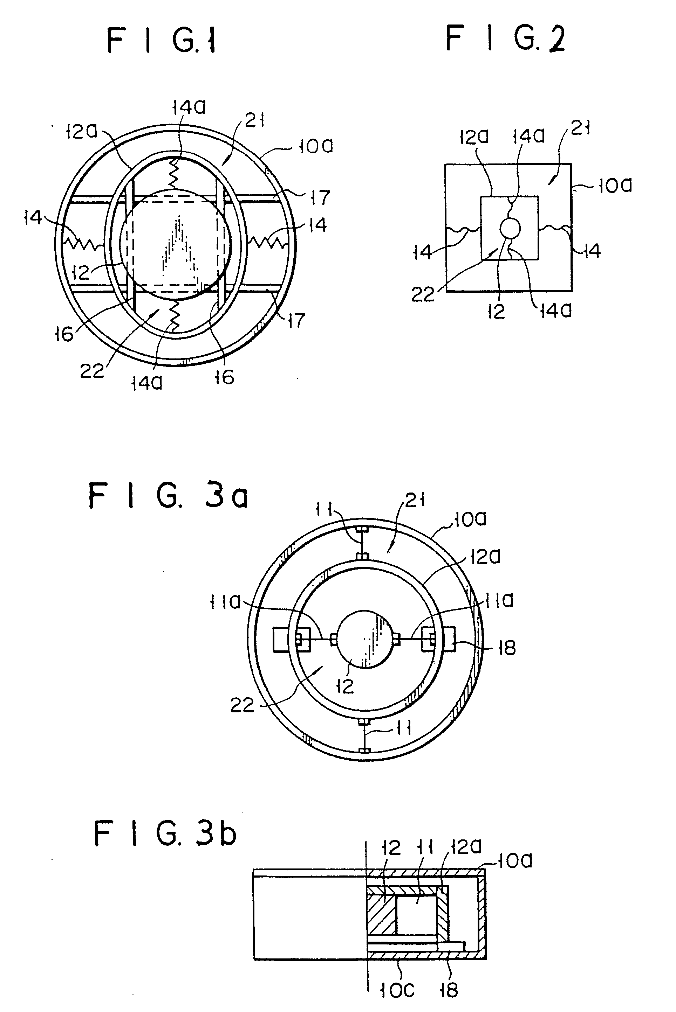

Referring now to Fig. 1, a first embodiment of the invention will be described. An elliptical inner frame 12a is supported within a ring-shaped outer frame 10a, as an absorber body, by a pair of coil springs 14 stretched in the X-direction. Frame 12a can move in the X-direction, guided by a pair of guide members 17 inside frame 10a. Inside inner frame 12a, a weight 12 is supported by means of a pair of coil springs 14a stretched in the Y-direction. It can move in the Y-direction, guided by a pair of guide members 16 inside inner frame 12a. Thus, springs 14a and the mass of weight 12 form Y-direction dynamic vibration absorber unit 22, while springs 14 and the respective masses of weight 12 and inner frame 12a constitute X-direction dynamic vibration absorber unit 21.

Whirling vibration of a post or the like can be damped by mounting the dynamic vibration absorber of the above described construction on the top portion of the post, or by setting the absorber in the post so that the wall of the post serves as an outer frame.

As shown in Fig. 2, outer and inner frames 10a and 12a may alternatively be square-shaped.

Referring now to Figs. 3(a) and 3(b), a second embodiment of the invention will be described. In this embodiment, outer frame 10a is formed of a ring-shaped closed container in which oil is sealed. Ring-shaped inner frame 12a is supported by a pair of leaf springs 11 extending in the Y-direction. It can move in the X-direction on guide member 18 which is mounted on bottom plate 10c of the outer frame. Inside inner frame 12a, weight 12 is supported by a pair of leaf springs 11a extending in the X-direction, and can move in the X-direction. The whirling vibration of a post or the like can be damped in the same manner as in the first embodiment. The dynamic vibration absorber can effect optimum damping if oil with a suitable viscosity is sealed therein.

## Claims

1. A dynamic vibration body comprising dynamic vibration absorber units (21, 22) of a spring-supported pendulum type arranged at right angles to one another within a horizontal plane, **characterized in that** one (21) of said dynamic vibration absorber units in one direction includes an outer frame (10a) of said body, said outer frame enclosing an inner frame (12a) as weight means mounted in the outer frame (10a) by means of first springs (14) such as to move in said one direction, and the other dynamic vibration absorber unit (22) at right angles of the first one includes the inner frame (12a) and a weight (12) mounted in the inner frame by means of second springs (14a) such as to move in a direction at right angle to the said one direction.

2. The absorber of claim 1, **characterized in that** the inner frame (12a) is an elliptical frame, and wherein the outer frame (10a) is a ring-shaped frame.

3. The absorber of claim 2, **characterized in that** the inner frame (12a) is guided by a first pair of guide members (17) inside the outer frame (10a) and that the weight (12) is guided by a second pair of guide members (16) inside the inner frame (12a), wherein the first and second pair of guide members extend perpendicular to each other.

4. The absorber according to one of the preceding claims, **characterized in that** said outer frame (10a) is a closed container with oil sealed therein.

## Revendications

1. Corps amortisseur dynamique de vibrations comprenant des unités d'amortissement dynamique de vibrations (21, 22) du type pendule à suspension par ressorts disposées, perpendiculaires l'une à l'autre dans un plan horizontal, caractérisé en ce que l'une (21) de ces unités d'amortissement dynamique de vibrations dans une première direction comprend un cadre extérieur (10a) de ce corps, ce cadre extérieur en fermant un cadre intérieur (12a) en tant que masse montée dans le cadre extérieur (10a) au moyen de premiers ressorts (14) de façon à se déplacer dans cette première direction, et l'autre unité d'amortissement dynamique de vibrations (22) perpendiculaire à la première comprend le cadre intérieur (12a) et une masse (12) montée dans le cadre intérieur au moyen de deuxièmes ressorts (14a) de façon à se déplacer dans une direction perpendiculaire à la première direction.

2. Amortisseur selon la revendication 1, caractérisé en ce que le cadre intérieur (12a) est un cadre elliptique et le cadre extérieur (10a) est un cadre circulaire.

3. Amortisseur selon la revendication 2, caractérisé en ce que le cadre intérieur (12a) est guidé à l'intérieur du cadre extérieur (10a) par une première paire d'éléments de guidage (17) et en ce que la masse (12) est guidée à l'intérieur du cadre intérieur (12a) par une deuxième paire d'éléments de guidage (16), la première paire et la deuxième paire d'éléments de guidage s'étendant perpendiculairement l'une par rapport à l'autre.

4. Amortisseur selon l'une des revendications précédentes, caractérisé en ce que le cadre extérieur (10a) est un récipient clos contenant de l'huile enfermée de façon hermétique.

## Patentansprüche

1. Dämpferkörper für dynamische Schwingungen, umfassend Dämpfereinheiten (21, 22) für dynamische Schwingungen vom federgestützten Pendeltyp, die rechtwinklig zueinander in einer Horizontalebene angeordnet sind, **dadurch gekennzeichnet, daß** eine (21) der Dämpfereinheiten für dynamische Schwingungen in einer Richtung einen Außenrahmen (10a) des Körpers aufweist, der als Gewichtseinrichtung einen Innenrahmen (12a) einschließt, der durch erste Federn (14) so in dem Außenrahmen (10a) angeordnet ist, daß er in der genannten einen Richtung bewegbar ist, und die zur ersten Dämpfereinheit rechtwinklige andere Dämpfereinheit (22) für dynamische Schwingungen den Innenrahmen (12a) und ein Gewicht (12) aufweist, das durch zweite Federn (14a) so in dem Innenrahmen angeordnet ist, daß es in einer zu der genannten einen Richtung rechtwinkligen Richtung bewegbar ist.

2. Dämpfer nach Anspruch 1, **dadurch gekennzeichnet, daß** der Innenrahmen (12a) ein elliptischer Rahmen und der Außenrahmen (10a) ein ringförmiger Rahmen ist.

3. Dämpfer nach Anspruch 2, **dadurch gekennzeichnet, daß** der Innenrahmen (12a) von einem ersten Paar von Führungen (17) in dem Außenrahmen (10a) geführt ist und daß das Gewicht (12) von einem zweiten Paar von Führungen (16) in dem Innenrahmen (12a) geführt ist, wobei das erste und das zweite Paar von Führungen senkrecht zueinander verlaufen.

4. Dämpfer nach einem der vorhergehenden Ansprüche, **dadurch gekennzeichnet, daß** der Außenrahmen (10a) ein geschlossener Behälter mit darin hermetisch eingeschlossenem Öl ist.

# F I G.1

# F I G.2

# F I G. 3a

# F I G. 3b